Europäisches Patentamt

European Patent Office

Office européen des brevets

(19)

(11) EP 1 598 813 A1

(12) **EUROPEAN PATENT APPLICATION**

(43) Date of publication:
23.11.2005 Bulletin 2005/47

(51) Int Cl.7: **G11B 5/66**, G11B 5/73

(21) Application number: 05017215.4

(22) Date of filing: 29.11.2000

(84) Designated Contracting States:
**AT BE CH CY DE DK ES FI FR GB GR IE IT LI LU MC NL PT SE TR**
Designated Extension States:
**AL LT LV MK RO SI**

(62) Document number(s) of the earlier application(s) in accordance with Art. 76 EPC:
**00979006.4 / 1 359 570**

(71) Applicant: **FUJITSU LIMITED**
**Kawasaki-shi, Kanagawa 211-8588 (JP)**

(72) Inventors:
• **Sato, Kenji c/o Yamagata Fujitsu Limited**
**Higashine-shi Yamagata 999-3701 (JP)**
• **Yoshida, Yuki c/o Yamagata Fujitsu Limited**
**Higashine-shi Yamagata 999-3701 (JP)**
• **Umeda, Hisashi c/o Yamagata Fujitsu Limited**
**Higashine-shi Yamagata 999-3701 (JP)**

(74) Representative: **Stebbing, Timothy Charles et al**
**Haseltine Lake,**
**Imperial House,**
**15-19 Kingsway**
**London WC2B 6UD (GB)**

Remarks:
This application was filed on 08 - 08 - 2005 as a divisional application to the application mentioned under INID code 62.

(54) **Magnetic recording medium and magnetic storage apparatus**

(57) A magnetic recording medium is constructed to include an intermediate layer (7) made of a ferromagnetic material, a nonmagnetic coupling layer (8) provided on the intermediate layer, and a magnetic layer (9) provided on the nonmagnetic coupling layer, and the intermediate layer (7) reverses magnetization independently of the magnetic layer (9) and functions as a ferrimagnetic coupling layer such that a magnetization direction of the intermediate layer is antiparallel to that of the magnetic layer in a state where no magnetic field is applied thereto.

FIG.1

EP 1 598 813 A1

## Description

TECHNICAL FIELD

The present invention generally relates to magnetic recording media and magnetic storage apparatuses, and more particularly to a magnetic recording medium and a magnetic storage apparatus which are suited for high-density recording.

BACKGROUND ART

The recording density of longitudinal magnetic media such as magnetic disks has increased considerably due to the reduction of medium noise and the development of magneto-resistive heads and spin-valve heads. A typical magnetic recording medium has a stacked structure having a substrate, an underlayer, a magnetic layer and a protective layer which are stacked in this sequence. The underlayer is made of Cr or a Cr alloy, and the magnetic layer is made of a Co alloy.

Various methods have been proposed to reduce the medium noise. For example, Okamoto et al., "Rigid Disk Medium for 5 Gbit/in$^2$ Recording", AB-3, Intermag '96 Digest proposes the use of a suitable underlayer made of CrMo and the reduction of the thickness of the magnetic layer, so as to reduce the grain size and the grain size distribution of the magnetic layer. In addition, a United States Patent No.5,693,426 proposes the use of an underlayer made of NiAl. Furthermore, Hosoe et al., "Experimental Study of Thermal Decay in High-Density Magnetic Recording Media", IEEE Trans. Magn. Vol.33, 1528 (1997) proposes the use of an underlayer made of CrTi. The underlayers described above promote in-plane orientation of the magnetic layer and increase the residual magnetization and the thermal stability of bits. Proposals have also been made to reduce the thickness of the magnetic layer to increase the resolution or, to reduce the transition width between the written bits. Moreover, a proposal has also been made to promote Cr segregation of a magnetic layer made of a CoCr alloy, and to reduce the exchange coupling of the grains.

However, as the grains of the magnetic layer become smaller and more magnetically isolated from each other, the written bits become unstable due to thermal activation and to demagnetizing fields which increase with linear density. Lu et al., "Thermal Instability at 10 Gbit/in$^2$ Magnetic Recording", IEEE Trans. Magn. Vol.30, 4230 (1994) demonstrated, by micromagnetic simulation, that exchange-decoupled grains having a diameter of 10 nm and ratio $K_uV/k_BT \sim 60$ in 400 kfci di-bits are susceptible to significant thermal decay, where $K_u$ denotes the magnetic anisotropy constant, V denotes the average magnetic grain volume, $k_B$ denotes the Boltzmann constant, and T denotes the temperature. The ratio $K_uV/k_BT$ is also referred to as a thermal stability factor.

It has been reported in Abarra et al., "Thermal Stability of Narrow Track Bits in a 5 Gbit/in$^2$ Medium", IEEE Trans. Magn. Vol.33, 2995 (1997) that the presence of intergranular exchange interaction stabilizes written bits, by MFM studies of annealed 200 kfci bits on a 5 Gbit/in$^2$ CoCrPtTa/CrMo medium. However, more grain decoupling is essential for recording densities of 20 Gbit/in$^2$ or greater.

The obvious solution has been to increase the magnetic anisotropy of the magnetic layer. But unfortunately, the increased magnetic anisotropy places a great demand on the head write field which degrades the "overwrite" performance which is the ability of write over previously written data.

In addition, the coercivity of thermally unstable magnetic recording medium increases rapidly with decreasing switching time, as reported in He et al., "High Speed Switching in Magnetic Recording Media", J. Magn. Magn. Mater. Vol.155, 6 (1996), for magnetic tape media, and in J. H. Richter, "Dynamic Coercivity Effects in Thin Film Media", IEEE Trans. Magn. Vol.34, 1540 (1997), for magnetic disk media. Consequently, the adverse effects are introduced in the data rate, that is, how fast data can be written on the magnetic layer and the amount of head field required to reverse the magnetic grains.

On the other hand, another proposed method of improving the thermal stability increases the orientation ratio of the magnetic layer, by appropriately texturing the substrate under the magnetic layer. For example, Akimoto et al., "Relationship Between Magnetic Circumferential Orientation and Magnetic Thermal Stability", J. Magn. Magn. Mater. (1999), in press, report through micromagnetic simulation, that the effective ratio $K_uV/k_BT$ is enhanced by a slight increase in the orientation ratio. This further results in a weaker time dependence for the coercivity which improves the overwrite performance of the magnetic recording medium, as reported in Abarra et al., "The Effect of Orientation Ratio on the Dynamic Coercivity of Media for >15 Gbit/in$^2$ Recording", EB-02, Intermag '99, Korea.

Furthermore, keepered magnetic recording media have been proposed for thermal stability improvement. The keeper layer is made up of a magnetically soft layer parallel to the magnetic layer. This soft layer can be disposed above or below the magnetic layer. Oftentimes, a Cr isolation layer is interposed between the soft layer and the magnetic layer. The soft layer reduces the demagnetizing fields in written bits on the magnetic layer. However, coupling the magnetic layer to continuously-exchange coupled soft layer defeats the purpose of decoupling the grains of the magnetic layer (reducing exchange coupling of grains of the magnetic layer). As a result, the medium noise increases.

Various methods have been proposed to improve the thermal stability and to reduce the medium noise. However, there was a problem in that the proposed methods do not provide a considerable improvement of the thermal stability of written bits, thereby making it difficult to greatly reduce the medium noise. In addition, there was another problem in that some of the proposed methods introduce adverse effects on the performance of the magnetic recording medium due to the measures taken to reduce the medium noise.

More particularly, in order to obtain a thermally stable performance of the magnetic recording medium, it is conceivable to (i) increase the magnetic anisotropy constant $K_u$, (ii) decrease the temperature T or, (iii) increase the grain volume V of the magnetic layer. However, measure (i) increases the coercivity, thereby making it more difficult to write information on the magnetic layer. In addition, measure (ii) is impractical since in magnetic disk drives, for example, the operating temperature may become greater than 60°C. Furthermore, measure (iii) increases the medium noise as described above. As an alternative for measure (iii), it is conceivable to increase the thickness of the magnetic layer, but this would lead to deterioration of the resolution.

DISCLOSURE OF THE INVENTION

Accordingly, it is a general object of the present invention to provide a novel and useful magnetic recording medium and magnetic storage apparatus, in which the problems described above are eliminated.

Another and more specific object of the present invention is to provide a magnetic recording medium and a magnetic storage apparatus, which can improve the thermal stability of written bits, reduce the medium noise, and carry out a highly reliable high-density recording without introducing undesirable effects on the performance of the magnetic recording medium, by use of a simple medium structure.

Still another object of the present invention is to provide a magnetic recording medium characterized by an intermediate layer made of a ferromagnetic material, a nonmagnetic coupling layer provided on the intermediate layer, and a magnetic layer provided on the nonmagnetic coupling layer, where the intermediate layer reverses magnetization independently of the magnetic layer, and functions as a ferrimagnetic coupling layer such that a magnetization direction of the intermediate layer is antiparallel to that of the magnetic layer in a state where no magnetic field is applied thereto (in an information holding state where no head field is applied thereto). According to the magnetic recording medium of the present invention, it is possible to improve the thermal stability of written bits by use of a simple medium structure, and to reduce the medium noise and carry out a highly reliable high-density recording without introducing adverse effects on the performance of the magnetic recording medium.

The intermediate layer may be made of a material selected from a group of Co alloys having a hcp structure and including CoCrTa and CoCrPtTa. In this case, a Cr content may be 10 at% or greater but 20 at% or less, a Ta content may be 0.5 at% or greater but 10 at% or less, and a Pt content may be 10 at% or less.

A further object of the present invention is to provide a magnetic storage apparatus having at least one magnetic recording medium described above. According to the magnetic storage apparatus of the present invention, it is possible to improve the thermal stability of written bits by use of a simple medium structure, and to reduce the medium noise and carry out a highly reliable high-density recording without introducing adverse effects on the performance of the magnetic recording medium.

Other objects and further features of the present invention will be apparent from the following detailed description when read in conjunction with the accompanying drawings.

BRIEF DESCRIPTION OF THE DRAWING

FIG. 1 is a cross sectional view showing an important part of a first embodiment of a magnetic recording medium according to the present invention;
FIG. 2 is a cross sectional view showing an important part of a second embodiment of the magnetic recording medium according to the present invention;
FIG. 3 is a diagram showing an in-plane magnetic characteristic of a single CoPt layer having a thickness of 10 nm formed on a Si substrate;
FIG. 4 is a diagram showing in-plane magnetic characteristics of two CoPt layers separated by an Ru layer having a thickness of 0.8 nm;
FIG. 5 is a diagram showing in-plane magnetic characteristics of two CoPt layers separated by an Ru layer having a thickness of 1.4 nm;
FIG. 6 is a diagram showing in-plane magnetic characteristics of two CoCrPt layers separated by an Ru layer having a thickness of 0.8 nm;
FIG. 7 is a cross sectional view showing an important part of a third embodiment of the magnetic recording medium according to the present invention;
FIG. 8 is a cross sectional view showing an important part of a fourth embodiment of the magnetic recording medium according to the present invention;
FIG. 9 is a cross sectional view showing an important part of a fifth embodiment of the magnetic recording medium according to the present invention;
FIG. 10 is a diagram showing a hysteresis loop of the third embodiment of the magnetic recording medium;
FIG. 11 is a diagram showing a hysteresis loop of the fourth embodiment of the magnetic recording medium;
FIG. 12 is a diagram showing a hysteresis loop of the fifth embodiment of the magnetic recording medium;

FIG. 13 is a diagram showing electromagnetic conversion characteristics of the third through fifth embodiments;

FIG. 14 is a cross sectional view showing an important part of an embodiment of a magnetic storage apparatus according to the present invention; and

FIG. 15 is a plan view showing an important part of the embodiment of the magnetic storage apparatus.

BEST MODE OF CARRYING OUT THE INVENTION

A description will be given of each embodiment of a magnetic recording medium and a magnetic storage apparatus according to the present invention, by referring to the drawings.

First, a description will be given of the operating principle of the present invention.

The present invention submits the use of layers with antiparallel magnetization structures. For example, S. S. P. Parkin, "Systematic Variation of the Strength and Oscillation Period of Indirect Magnetic Exchange Coupling through the 3d, 4d, and 5d Transition Metals", Phys. Rev. Lett, Vol.67, 3598 (1991) describes several magnetic transition metals such as Co, Fe and Ni that are coupled through thin non-magnetic interlayers such as Ru and Rh. On the other hand, a U.S. Patent No.5,701,223 proposes a spin-valve which employs the above described layers as laminated pinning layers to stabilize the sensor.

For a particular Ru or Rh layer thickness between two ferromagnetic layers, the magnetizations can be made parallel or antiparallel. For example, for a structure made up of two ferromagnetic layers of different thickness with antiparallel magnetizations, the effective grain size of a magnetic recording medium can be increased without significantly affecting the resolution. A signal amplitude reproduced from such a magnetic recording medium is reduced due to the opposite magnetizations, but this can be rectified by adding another layer of appropriate thickness and magnetization direction, under the laminated magnetic layer structure, to thereby cancel the effect of one of the layers. As a result, it is possible to increase the signal amplitude reproduced from the magnetic recording medium, and to also increase the effective grain volume. Thermally stable written bits can therefore be realized.

The present invention increases the thermal stability of written bits by exchange coupling the magnetic layer to another ferromagnetic layer with an opposite magnetization or, by a laminated ferrimagnetic structure. The ferromagnetic layer or the laminated ferrimagnetic structure is made up of exchange-decoupled grains as the magnetic layer. In other words, the present invention uses an exchange pinning ferromagnetic layer or a ferrimagnetic multilayer to improve the thermal stability performance of the magnetic recording medium.

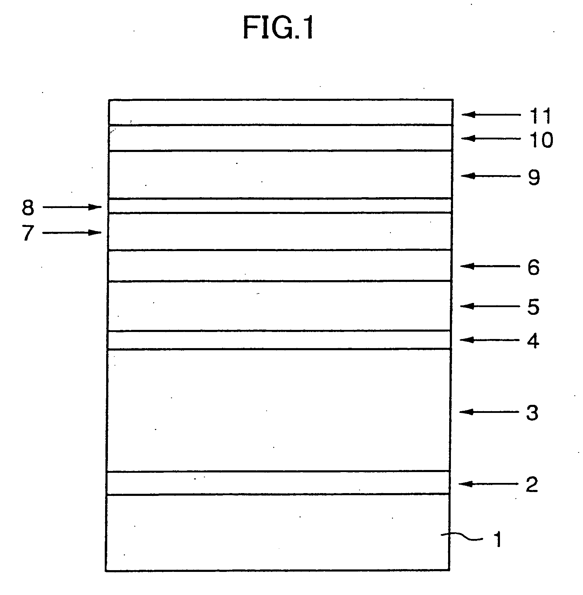

FIG. 1 is a cross sectional view showing an important part of a first embodiment of a magnetic recording medium according to the present invention.

The magnetic recording medium has a stacked structure having a nonmagnetic substrate 1, a first seed layer 2, a NiP layer 3, a second seed layer 4, an underlayer 5, a nonmagnetic intermediate layer 6, a ferromagnetic layer 7, a nonmagnetic coupling layer 8, a magnetic layer 9, a protective layer 10 and a lubricant layer 11 which are stacked in the sequence shown in FIG. 1.

For example, the nonmagnetic substrate 1 is made of Al, an Al alloy or glass. The nonmagnetic substrate 1 may or may not be textured. The first seed layer 2 is made of Cr, for example, particularly when the nonmagnetic substrate 1 is made of glass. A surface of the NiP layer 3 may or may not be subjected to a texturing process or an oxidation process. The second seed layer 4 is provided to improve the (001) orientation of the underlayer 5 which is made of Cr or a Cr alloy. The second seed layer 4 may be made of an appropriate material similar to that of the first seed layer 2.

In a case where the magnetic recording medium is a magnetic disk, the texturing process carried out with respect to the nonmagnetic substrate 1 or the NiP layer 3 is in a circumferential direction of the disk, that is, along a direction in which tracks on the disk extend.

The nonmagnetic intermediate layer 6 is provided to promote epitaxial growth of the layers 7 through 9, to reduce the grain size distribution, and to promote orientation of the anisotropic axis (axis of easy magnetization) of the magnetic layer 9 along a plane parallel to a recording surface of the magnetic recording medium. This nonmagnetic intermediate layer 6 is made of an alloy having a hcp structure, such as a CoCr-M alloy, and has a thickness selected in a range of 1 nm to 5 nm, where M = B, Cu, Mo, Nb, Ta, W or alloys thereof.

The ferromagnetic layer 7 is made of Co, Ni, Fe, a Co alloy, a Ni alloy, a Fe alloy or the like. In other words, Co alloys including CoCrTa, CoCrPt and CoCrPt-M may be used for the ferromagnetic layer 7, where M = B, Cu, Mo, Nb, Ta, W or alloys thereof. The ferromagnetic layer 7 has a thickness selected in a range of 2 nm to 10 nm. The nonmagnetic coupling layer 8 is made of Ru, Rh, Ir, a Ru alloy, a Rh alloy, an Ir alloy or the like. For example, the nonmagnetic coupling layer 8 has a thickness selected in a range of 0.4 nm to 1.0 nm, and preferably in a range of approximately 0.6 nm to approximately 0.8 nm. By selecting the thickness of the nonmagnetic coupling layer 8 in this range, the magnetization directions of the ferromagnetic layer 7 and the magnetic layer 9 become mutually antiparallel in a state where no magnetic field is applied thereon. The ferromagnetic layer 7 and the nonmagnetic coupling layer 8 form an exchange layer structure.

The magnetic layer 9 is made of Co or a Co alloy such as CoCrTa, CoCrPt, CoCrPt-M, where M = B, Cu, Mo, Nb, Ta, W or alloys thereof. The magnetic layer 9 has a thickness selected in a range of 5 nm to 30 nm. Of course, the magnetic layer 9 is not limited to a single-layer structure, and may have a multi-layer structure.

The protective layer 10 is made of C, for example. In addition, the lubricant layer 11 is made of an organic lubricant so that the magnetic recording medium may be used with a magnetic transducer such as a spin-valve head. The protective layer 10 and the lubricant layer 11 form a protective layer structure on the magnetic recording medium.

The layer structure provided under the exchange layer structure is of course not limited to that shown in FIG. 1. For example, the underlayer 5 may be made of Cr or a Cr alloy and formed to a thickness in a range of 5 nm to 40 nm on the substrate 1, and the exchange layer structure may be provided on such an underlayer 5.

Next, a description will be given of a second embodiment of the magnetic recording medium according to the present invention.

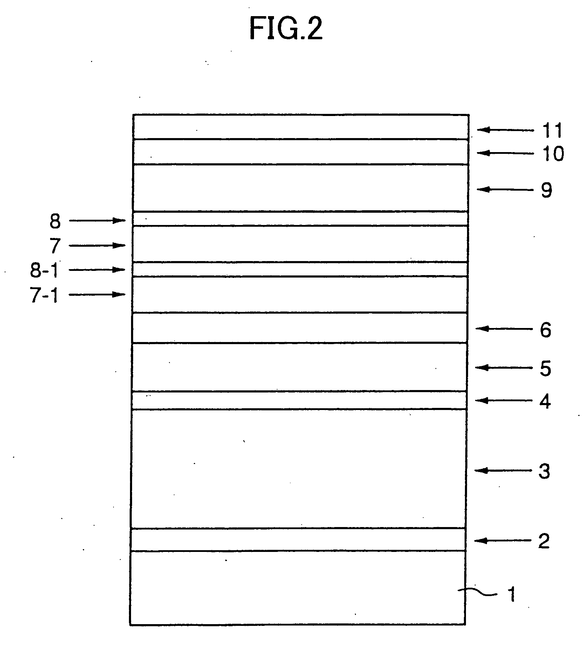

FIG. 2 is a cross sectional view showing an important part of a second embodiment of the magnetic recording medium according to the present invention. In FIG. 2, those parts which are the same as those corresponding parts in FIG. 1 are designated by the same reference numerals, and a description thereof will be omitted.

In this second embodiment of the magnetic recording medium, the exchange layer structure includes two nonmagnetic coupling layers 8 and 8-1 and two ferromagnetic layers 7 and 7-1 which form a synthetic ferrimagnetic multi-layer structure. By employing such a structure, the magnetizations of the two ferromagnetic layers 7 and 7-1 will not cancel each other and will not cancel a portion of the magnetization of the magnetic layer 9, thereby increasing the effective magnetization and signal. As a result, the grain volume and the thermal stability of the magnetization of the magnetic layer 9 effectively increase. As long as the orientation of the axis of easy magnetization of the recording layer is maintained in the desired state, the double layer structure having two pairs of ferromagnetic layer and nonmagnetic coupling layer can increase the effective grain volume.

The ferromagnetic layer 7-1 is made of a material similar to that of the ferromagnetic layer 7, and has a thickness selected in a range similar to that of the ferromagnetic layer 7. In addition, the nonmagnetic coupling layer 8-1 is made of a material similar to that of the nonmagnetic coupling layer 8, and has a thickness selected in a range similar to that of the nonmagnetic coupling layer 8. The x-axis is substantially in-plane and the grains grown in a columnar manner in the ferromagnetic layers 7 and 7-1.

In this embodiment, the magnetic anisotropy of the ferromagnetic layer 7-1 is set larger than the magnetic anisotropy of the ferromagnetic layer 7. However, the magnetic anisotropy of the ferromagnetic layer 7-1 may be set smaller than, equal to or larger than the magnetic anisotropy of the ferromagnetic layer 7, as long as the magnetic anisotropy of the ferromagnetic layer 7 is smaller than the magnetic anisotropy of the magnetic layer 9 provided above the ferromagnetic layer 7 and the ferromagnetic layer 7-1 provided below the ferromagnetic layer 7.

In addition, a residual magnetization and thickness of the ferromagnetic layer 7 is set smaller than a residual magnetization and thickness of the ferromagnetic layer 7-1.

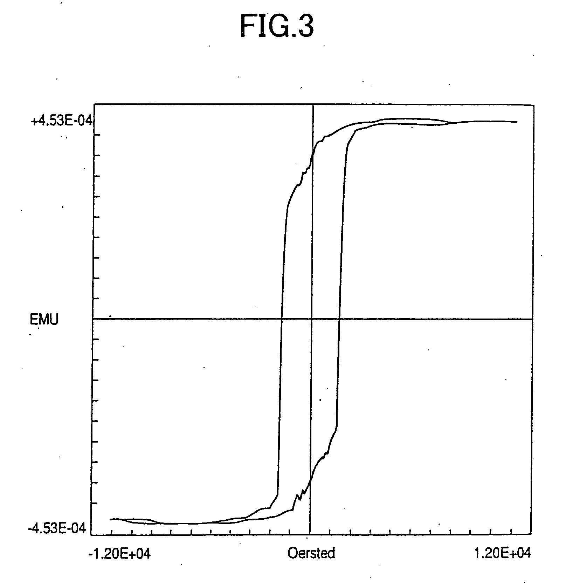

FIG. 3 is a diagram showing an in-plane magnetic characteristic of a single CoPt layer having a thickness of 10 nm formed on a Si substrate. In FIG. 3, the ordinate indicates the magnetization (emu), and the abscissa indicates the coercivity (Oe). Conventional magnetic recording media show a behavior similar to that shown in FIG. 3.

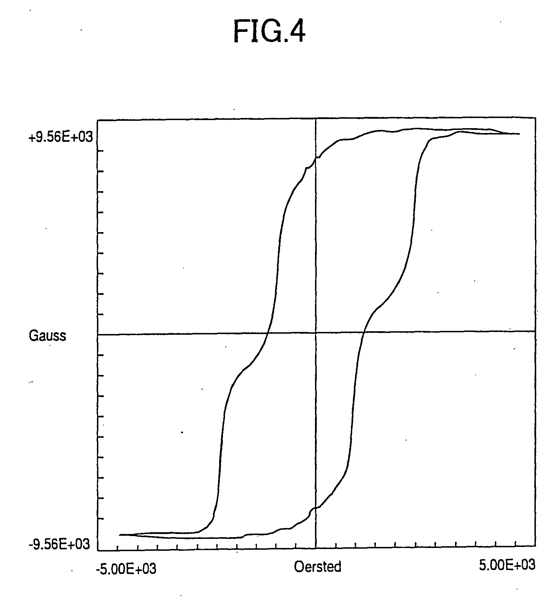

FIG. 4 is a diagram showing in-plane magnetic characteristics of two CoPt layers separated by an Ru layer having a thickness of 0.8 nm, as in the case of the first embodiment of the magnetic recording medium. In FIG. 4, the ordinate indicates the residual magnetization (Gauss), and the abscissa indicates the coercivity (Oe). As may be seen from FIG. 4, the loop shows shifts near the magnetic field which indicates antiparallel coupling.

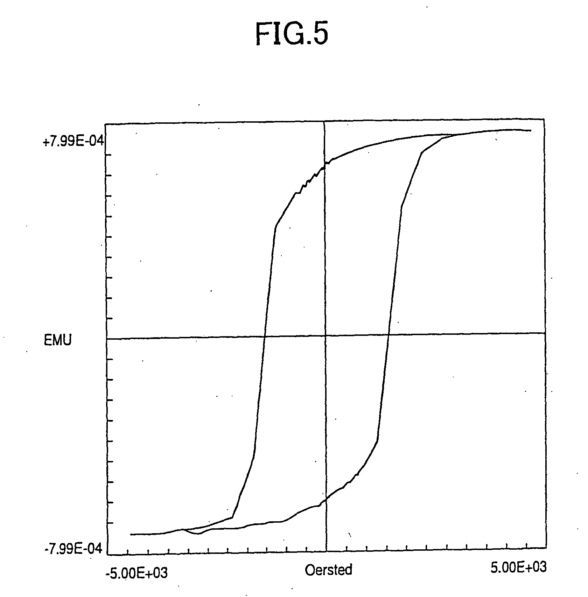

FIG. 5 is a diagram showing in-plane magnetic characteristics of two CoPt layers separated by an Ru layer having a thickness of 1.4 nm. In FIG. 5, the ordinate indicates the residual magnetization (emu), and the abscissa indicates the coercivity (Oe). As may be seen from FIG. 5, the magnetization directions of the two CoPt layers are parallel.

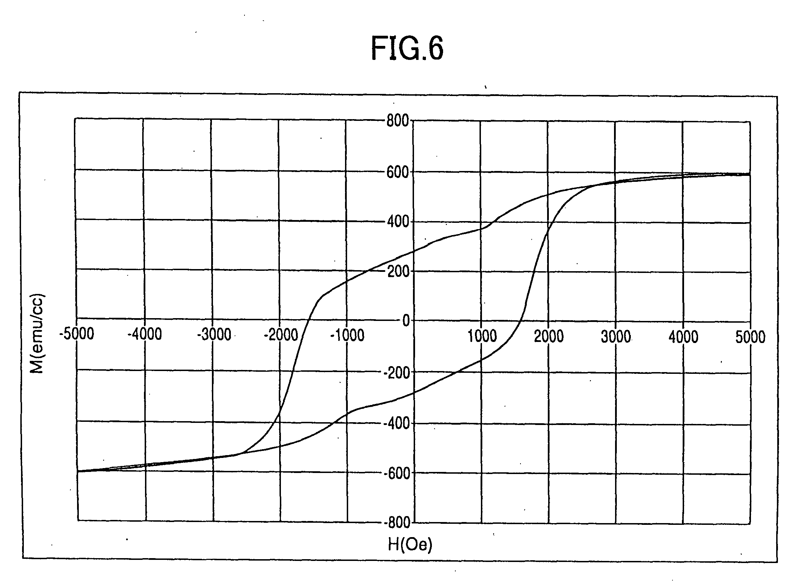

FIG. 6 is a diagram showing in-plane magnetic characteristics of two CoCrPt layers separated by an Ru layer having a thickness of 0.8 nm. In FIG. 6, the ordinate indicates the residual magnetization (emu/cc), and the abscissa indicates the coercivity (Oe). As may be seen from FIG. 6, the loop shows shifts near the magnetic field which indicates the antiparallel coupling.

It may be seen from FIGS. 3 and 4 that the antiparallel coupling is obtained by providing the exchange layer structure. In addition, as may be seen by comparing FIG. 5 with FIGS. 4 and 6, the thickness of the nonmagnetic coupling layer 8 is preferably in a range of 0.4 nm to 0.9 nm in order to obtain the antiparallel coupling.

Therefore, according to the first and second embodiments of the magnetic recording medium, it is possible to increase the effective grain volume without sacrificing the resolution, by utilizing the exchange coupling between the magnetic layer and the ferromagnetic layer via the nonmagnetic coupling layer. In other words, from the point of view of the grain volume, the apparent thickness of the magnetic layer can be increased so that it is possible to realize a magnetic recording medium having a good thermal stability. In addition, the effective thickness of the magnetic layer does not change, because the reproduced output from the lower magnetic layer is cancelled. For this reason, the apparent thickness of the magnetic layer increases, but the effective thickness of the magnetic layer remains unchanged and can be kept small, thereby making it possible to obtain a high resolution which cannot be obtained by a magnetic recording medium having a thick magnetic layer. As a result, it is possible to obtain a magnetic recording medium having reduced medium noise and improved thermal stability.

Next, a description will be given of a third embodiment of the magnetic recording medium according to the present invention.

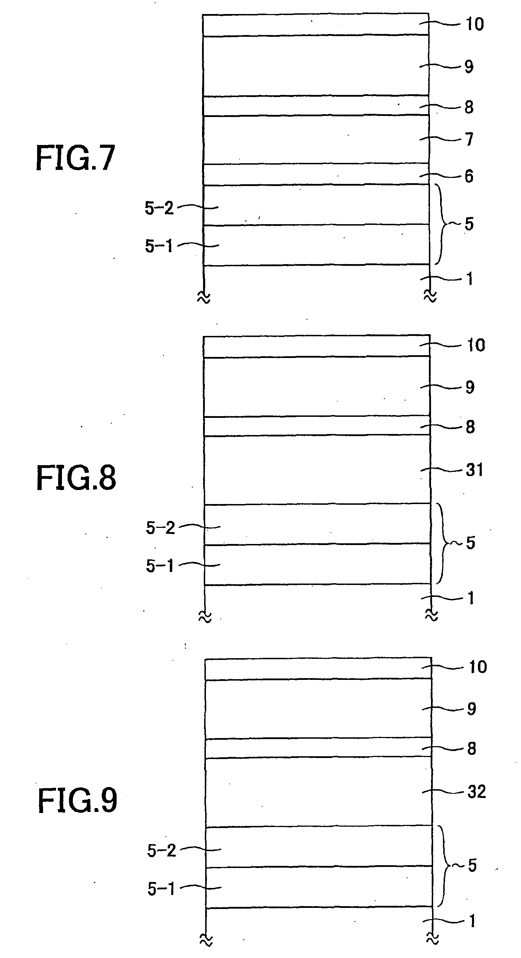

FIG. 7 is a cross sectional view showing an important part of the third embodiment of the magnetic recording medium according to the present invention. In FIG. 7, those parts which are the same as those corresponding parts in FIG. 1 are designated by the same reference numerals, and a description thereof will be omitted.

In this embodiment, the nonmagnetic substrate 1 is made of Al having a surface provided with a NiP plated layer (not shown). A surface of the NiP plated layer is subjected to a texturing process or an oxidation process. Alternatively, the nonmagnetic substrate 1 may be made of glass, reinforced glass or crystallized glass having a surface provided with an orientation adjusting layer made of NiP, CrP, NiAl or the like.

The Cr alloy underlayer 5 has a 2-layer structure. More particularly, the underlayer 5 includes a first underlayer 5-1 made of Cr and having a thickness of 3 nm, and a second underlayer 5-2 made of $CrMo_{25}$ and having a thickness of 3 nm. The Co alloy nonmagnetic intermediate layer 6 is made of $CoCr_{13}Ta_5$ having a thickness of 1 nm. The ferromagnetic layer 7 is made of $CoCr_{20}Pt_{10}B_6Cu_4$ having a thickness of 5 nm. The nonmagnetic coupling layer 8 is made of Ru having a thickness of 0.6 nm. The magnetic layer 9 is made of $CoCr_{20}Pt_{10}B_6Cu_4$ having the same composition as the ferromagnetic layer 7 and having a thickness of 12 nm.

Next, a description will be given of a fourth embodiment of the magnetic recording medium according to the present invention.

FIG. 8 is a cross sectional view showing an important part of the fourth embodiment of the magnetic recording medium according to the present invention. In FIG. 8, those parts which are the same as those corresponding parts in FIG. 7 are designated by the same reference numerals, and a description thereof will be omitted.

In this embodiment, a ferromagnetic intermediate layer 31 shown in FIG. 8 is provided in place of the nonmagnetic intermediate layer 6 and the ferromagnetic layer 7 shown in FIG. 7. The Co alloy ferromagnetic intermediate layer 31 is made of $CoCr_{13}Ta_5$ and has a thickness of 3 nm. The compositions and thicknesses of the other layers 5, 8 and 9 are the same as those of the third embodiment shown in FIG. 7. Furthermore, the layers 5-1, 5-2, 31, 8 and 9 of the magnetic recording medium may be successively sputtered on the nonmagnetic substrate 1 after cleaning the nonmagnetic substrate 1 and heating the nonmagnetic substrate 1 to 220°C by a magnetron sputtering apparatus.

FIG. 9 is a cross sectional view showing an important part of a fifth embodiment of the magnetic recording medium according to the present invention. In FIG. 9, those parts which are the same as those corresponding parts in FIG. 8 are designated by the same reference numerals, and a description thereof will be omitted.

In this embodiment, an intermediate layer 32 shown in FIG. 9 is provide in place of the intermediate layer 31 shown in FIG. 8. The Co alloy intermediate layer 32 is made of $CoCr_{20}Pt_{10}B_6Cu_4$ having the same composition as the magnetic layer 9 and has a thickness of 3.nm.

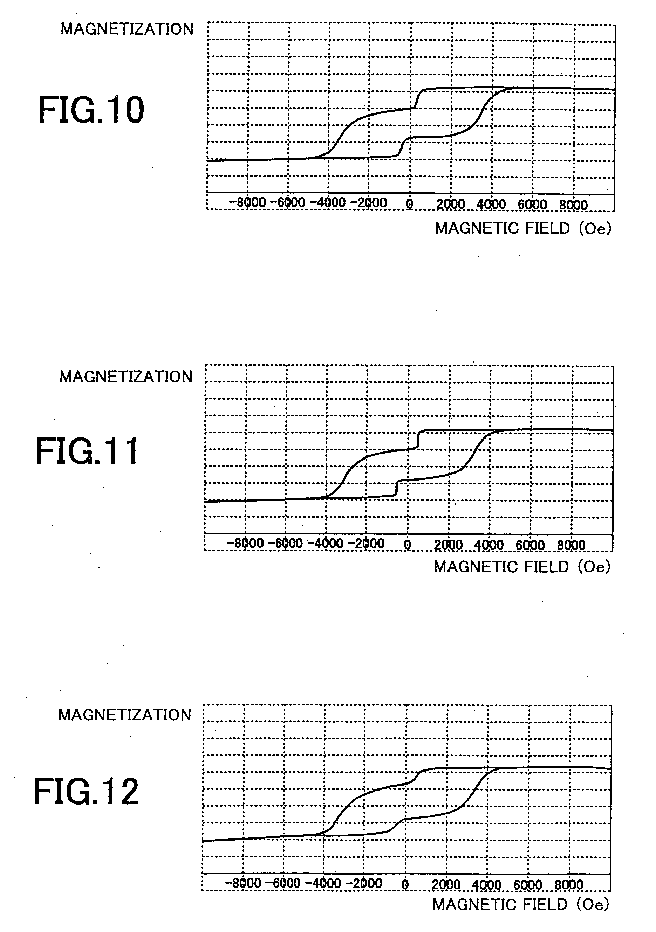

FIGS. 10, 11 and 12 are diagrams respectively showing hysteresis loops of the third, fourth and fifth embodiments of the magnetic recording medium shown in FIGS. 7, 8 and 9. In FIGS. 10 through 12, the ordinate indicates the magnetization in arbitrary units, and the abscissa indicates the magnetic field (Oe).

As may be seen from FIGS. 10 through 12, it was confirmed that the magnetization rapidly changes near the magnetic field of approximately 300 Oe to approximately 500 Oe. This indicates that, due to the magnetic field, the ferromagnetic layer 7 or the intermediate layer 31 or 32 provided below functions as a ferrimagnetic coupling layer and reverses magnetization independently of the magnetic layer 9 provided above, and the magnetization directions are antiparallel between the magnetic layer 9 and the ferrimagnetic coupling layer (ferromagnetic layer 7 or intermediate layer 31 or 32).

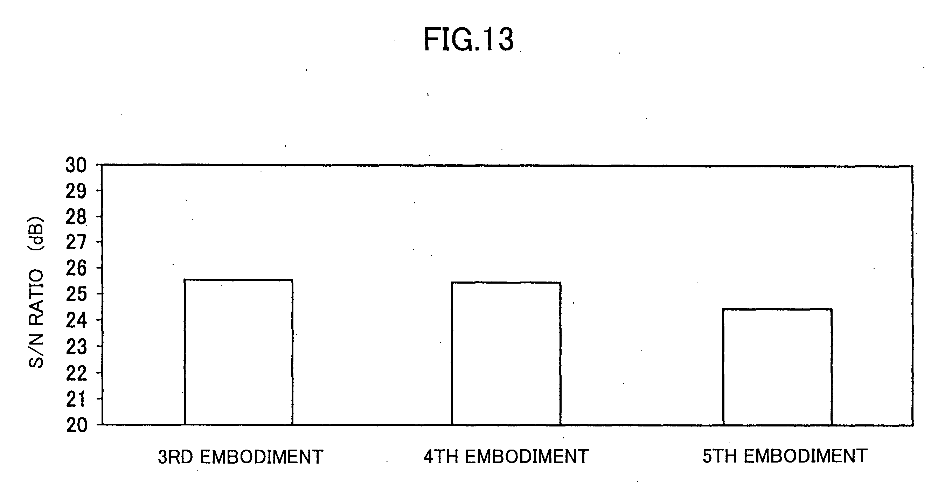

FIG. 13 is a diagram showing electromagnetic conversion characteristics of the third through fifth embodiments. In FIG. 13, the ordinate indicates a signal-to-noise (S/N) ratio (dB). The S/N ratio shown in FIG. 13 was obtained from the following formula in dB using a ratio of the reproduced output at 63.3 kfci and a medium noise at 357.3 kfci.

$$\text{S/N Ratio (dB)} = 20\log(\text{S/N}) \; ; \; \text{S, N (μVrms)}$$

As may be seen from FIG. 13, the S/N ratios of the third and fourth embodiments are approximately the same, and are higher than the S/N ratio of the fifth embodiment. In general, a $CoCr_{13}Ta_5$ magnetic layer generates more medium noise compared to a $CoCr_{20}Pt_{10}B_6Cu_4$ magnetic layer, but especially in the case of the fourth embodiment shown in FIG. 8 having the ferrimagnetic coupling layer (intermediate layer 31), it was confirmed that the S/N ratio does not have adverse effects on the medium noise of the magnetic recording medium as a whole. For this reason, the material forming the intermediate layer 6 of the third embodiment shown in FIG. 7 which is used for the purpose of promoting in-plane orientation of the magnetic layer 8, may be used for the intermediate layer 31 of the fourth embodiment shown in FIG. 8 to function as a ferrimagnetic coupling layer. In addition, mutual exchange among the magnetic grains is not discontinuous in the case of a material causing a large medium noise, and thus, such a material is thermally stable.

Therefore, by providing the intermediate layer 31 of the fourth embodiment as the ferrimagnetic coupling layer, it is possible to improve the in-plane orientation of the magnetic layer 9, and also improve the thermal stability of written bits on the magnetic recording medium without generating a source of the medium noise by the intermediate layer 31. Moreover, since the structure of the fourth embodiment has one less layer than the structure of the third embodiment, the magnetic recording medium can be produced by a smaller number of processes, and the production cost of the magnetic recording medium can be reduced.

In the fourth embodiment, the intermediate layer 31 may be made of a material selected from a group of Co alloys having a hcp structure, such as CoCrTa and CoCrPtTa, with a thickness which is preferably approximately 5 nm or less. In addition, in the intermediate layer 31 made of the Co alloy, it is desirable that the Cr content is 10 at% or greater but 20 at% or less, the Ta content is 0.5 at% or greater but 10 at% or less, and the Pt content is 10 at% or less. Moreover, the material used for the nonmagnetic coupling layer 8 is not limited to Ru, and it is possible to use a material selected from a group consisting of Ru, Rh, Ir, Cu, Cr or alloys thereof. Furthermore, the magnetic layer 9 may be made of a material selected from a group consisting of Co, Ni, Fe, Fe alloy, Ni alloy and Co alloy, where the Co alloy includes CoCrTa, CoCrPt and CoCrPt-M, and M = B, Cu, Mo, Nb, Ta, W or alloys thereof.

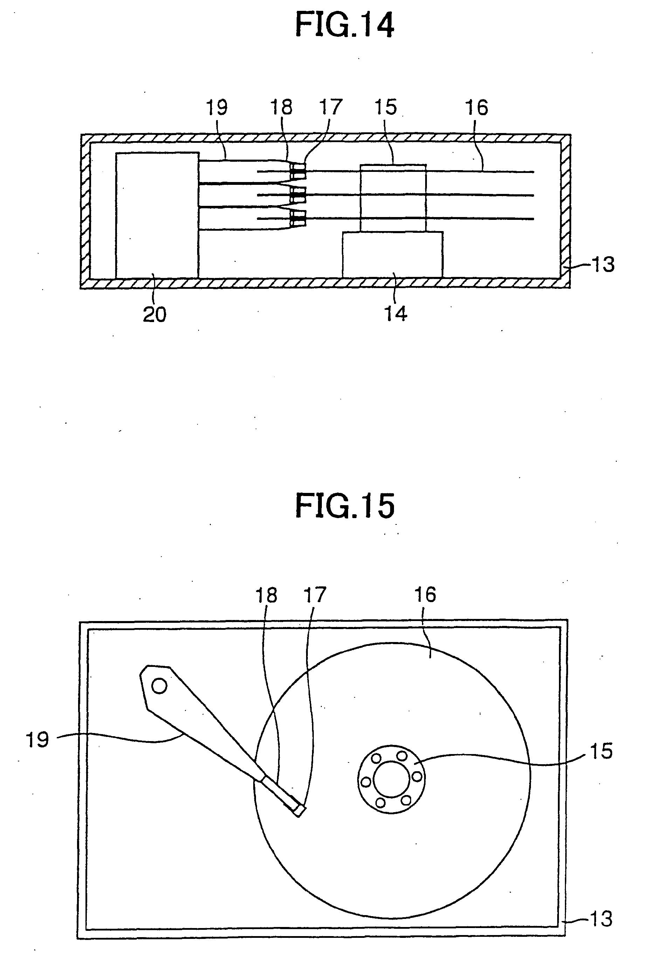

Next, a description will be given of an embodiment of a magnetic storage apparatus, by referring to FIGS. 14 and 15. FIG. 14 is a cross sectional view showing an important part of this embodiment of the magnetic storage apparatus, and FIG. 15 is a plan view showing an important part of this embodiment of the magnetic storage apparatus.

As shown in FIGS. 14 and 15, the magnetic storage apparatus generally includes a housing 13. A motor 14, a hub 15, a plurality of magnetic recording media 16, a plurality of recording and reproducing heads 17, a plurality of suspensions 18, a plurality of arms 19, and an actuator unit 20 are provided within the housing 13. The magnetic recording media 16 are mounted on the hub 15 which is rotated by the motor 14. The recording and reproducing head 17 is made up of a reproducing head such as a MR or GMR head, and a recording head such as an inductive head. Each recording and reproducing head 17 is mounted on the tip end of a corresponding arm 19 via the suspension 18. The arms 19 are moved by the actuator unit 20. The basic construction of this magnetic storage apparatus is known, and a detailed description thereof will be omitted in this specification.

This embodiment of the magnetic storage apparatus is characterized by the magnetic recording media 16. Each magnetic recording medium 16 has the structure of any of the first through fifth embodiments of the magnetic recording medium described above in conjunction with FIGS. 1, 2 and 7 through 9. Of course, the number of magnetic recording media 16 is not limited to three, and only one, two or four or more magnetic recording media 16 may be provided.

The basic construction of the magnetic storage apparatus is not limited to that shown in FIGS. 14 and 15. In addition, the magnetic recording medium used in the present invention is not limited to a magnetic disk.

Further, the present invention is not limited to these embodiments, but various variations and modifications may be made without departing from the scope of the present invention.

In particular, the nonmagnetic coupling layer may be made of a material selected from a group consisting of Ru, Rh, Ir, Cu, Cr or alloys thereof.

The magnetic layer may be made of a material selected from a group consisting of Co, Ni, Fe, Fe alloy, Ni alloy, and Co alloy, the Co alloy including CoCrTa, CoCrPt and CoCrPt-M, where M = B, Cu, Mo, Nb, Ta, W or alloys thereof.

In one embodiment, the nonmagnetic coupling layer is directly in contact with both the ferromagnetic intermediate layer and the magnetic layer.

A surface of the substrate may be subjected to a texturing process or an oxidation process, or it may be provided with an orientation adjusting layer.

**Claims**

1. A magnetic recording medium comprising:

   an underlayer made of a Cr alloy including CrMo;
   an intermediate layer provided on the underlayer and made of a ferromagnetic material;
   a nonmagnetic coupling layer provided on the intermediate layer; and
   a magnetic layer provided on the nonmagnetic coupling layer,
   said intermediate layer reversing magnetization independently of the magnetic layer, and functioning as a ferromagnetic coupling layer such that a magnetization direction of the intermediate layer is antiparallel to that of the magnetic layer in a state where no magnetic field is applied thereto.

2. The magnetic recording medium as claimed in claim 1, wherein said magnetic layer is made of a material including Pt.

3. The magnetic recording medium as claimed in claim 2, wherein said magnetic layer is made of a material selected from a group consisting of CoCrPt and CoCrPt-M, where M = B, Cu, Mo, Nb, Ta, W or alloys thereof.

4. A magnetic storage apparatus having at least one magnetic recording medium as claimed in any of claims 1 to 3.

# FIG.1

# FIG.2

# FIG.3

# FIG.4

# FIG.5

FIG.6

FIG.7

FIG.8

FIG.9

FIG.10

MAGNETIZATION

-8000 -6000 -4000 -2000  0  2000 4000 6000 8000

MAGNETIC FIELD (Oe)

FIG.11

MAGNETIZATION

-8000 -6000 -4000 -2000  0  2000 4000 6000 8000

MAGNETIC FIELD (Oe)

FIG.12

MAGNETIZATION

-8000 -6000 -4000 -2000  0  2000 4000 6000 8000

MAGNETIC FIELD (Oe)

16

FIG.13

# FIG.14

# FIG.15

**European Patent Office**

**EUROPEAN SEARCH REPORT**

Application Number

EP 05 01 7215

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 059 629 A (FUJITSU) 13 December 2000 (2000-12-13) * page 2, line 7 - line 9 * * page 6, line 39 - page 7, line 14 * * page 12, line 12 - line 18; figures 1,7,8 *<br>----- | 1-4 | G11B5/66 G11B5/73 |

TECHNICAL FIELDS SEARCHED (Int.Cl.7)

G11B

The present search report has been drawn up for all claims

| Place of search | Date of completion of the search | Examiner |
|---|---|---|
| The Hague | 27 September 2005 | Magrizos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 01 7215

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2005

| Patent document cited in search report | | Publication date | Patent family member(s) | | Publication date |
|---|---|---|---|---|---|
| EP 1059629 | A | 13-12-2000 | DE | 60006186 D1 | 04-12-2003 |
| | | | DE | 60006186 T2 | 03-06-2004 |
| | | | DE | 60013651 D1 | 14-10-2004 |
| | | | DE | 60013651 T2 | 17-02-2005 |
| | | | DE | 60014974 D1 | 18-11-2004 |
| | | | DE | 60014974 T2 | 17-03-2005 |

EPO FORM P0459

For more details about this annex : see Official Journal of the European Patent Office, No. 12/82